# NEW EUROPEAN PATENT SPECIFICATION

(11) **EP 0 146 317 B2**
(45) Date of publication and mention of the opposition decision: **08.01.1997**
(45) Mention of the grant of the patent: 08.07.1992
(21) Application number: 84308487.2
(22) Date of filing: 06.12.1984
(51) Int. Cl.: G02C 5/00

(54) **Eyeglass frame including shape memory elements**
Brillengestell mit formspeichernden Elementen
Monture de lunettes comprenant des éléments mémorisants la forme

(30) Priority: 06.12.1983 US 558604; 30.11.1984 US 676823
(43) Date of publication of application: 26.06.1985
(73) Proprietor: MARCHON EYEWEAR, Inc., Melville, NY 11747 (US)
(72) Inventor: Krumme, John F., Woodside, California 94062 (US); Zider, Robert B., Portola Valley, California 94028 (US)
(74) Representative: Diehl, Hermann O. Th., Dr.

(56) References cited:
- DE-A- 3 209 508
- JP-A- 5 548 725
- JP-A- 5 670 520
- JP-A- 5 689 715
- JP-A- 5 689 717
- JP-A- 5 695 215
- JP-A- 5 699 317
- JP-A-58 161 753
- JP-A-58 179 818
- JP-A-58 179 819
- JP-A-58 186 719
- JP-A-59 136 619
- US-A- 3 597 053
- PATENTS ABSTRACTS OF JAPAN, vol. 6, no. 209 (P-150)[1087], 21st October 1982; & JP-A-57 115 517
- PATENTS ABSTRACTS OF JAPAN, vol. 8, no. 23 (P-251)[1460], 31st January 1984; & JP-A-58 179 819
- Scripta METALLURGICA, vol 15, pp 287-292, 1981, Pergamon Press Ltd., USA. S.Miyazaki, K.tsuka and Y.Suzuki: "Transformation Pseudoelasticity and Deformation Behavior in a Ti-50.6at%Ni Alloy".
- National Aeronautics and Space Administration, Washington DC, USA. Report NASA-SP 5110, 1972, pp 28, 51 and 52. C.M.Jackson, H.J.Wagner and R.J.Wasilewski: "Nitinol, the Alloy with a Memory: Its Physical Metallurgy, Properties and Applications".
- Transactions of the Metallurgical Society of AIME, vol 242, December 1968, pp 2393-2395. S.Sastri and M.J.Marcinkowski: "Deformation Behavior in the Near-Equiatomic Ni-Ti Alloys"
- Scripta METALLURGICA, vol 14, pp 911-914, 1980, Pergamon Press Ltd., USA. T.Tadaki and C.M.Wayman: "Crystal Structure and Microstructure of a Cold Worked TiNi Alloy with Unusual Elastic Behaviour"
- Journal of Materials Science, vol 12, pp 469-480, 1977, Chapman and Hall Ltd., GB. H.A.Mohamed and J.Washburn: "Deformation behaviour and shape memory effect of near equi-atomic NiTi alloy"
- Scientific American, vol. 241, no 5, November 1979, pp 74-82, W.H.Freeman Co., San Francisco, USA. L.McDonald Schetky: "Shape-Memory Alloys"
- Matériaux et Techniques, Octobre-Novembre 1980, pp 350-354. G.Guenin et P.F.Gobin: "Les Alliages à Mémoire de Forme"
- Furukawa Electric Co.Ltd., Leaflet: "Commercial Applications of Shape Memory Alloys, Superelastic Alloys"
- Furukawa Electric Co.Ltd., August 1982, Leaflet: "Furukawa Super Elastic NT Alloy"
- Journal de Physique, Colloque C4, décembre 1982, pp 267-272. O.Mercier and E.Török: "Mechanical Properties of the Cold-Worked martensitic NiTi Type Alloys"
- Journal of Japanese Orthodontics Institute, vol 40, 1981, pp 345-355. T.Daisaku et al.: "Application of thermo-dynamic wire to orthodontic treatment"
- Proceedings of the International Conference on Martensitic Transformation ICOMAT 1979, Cambridge, Mass. USA, 24-29 June 1979, pp 474-479. V.H.Khachin et al.: "Lattice Instability, Martensitic Transformations, Plasticity and Anelasticity of TiNi"
- Journal of Metals, June 1980, pp 129-137. C.M.Wayman: "Some Applications of Shape-Memory Alloys"
- Nikko Material, vol 1, no 1, 1 June 1983, The Japan Engineering Materials (English Translation), pp 1-11. Y.Suzuki: "Superelastic Alloys"

## Description

The present invention relates to frames for eyeglasses and more particularly to frames fabricated from materials which undergo phase transformation at given temperatures or pursuant to stress and exhibit both shape memory properties and pseudo-elastic properties.

In the past, eyeglass frames have been made from metal or plastic. A combination metal and plastic frame has also been disclosed.

In the prior art, shape memory metals have been employed in the fabrication of eyeglass frames and related components. Such metals has been suggested for use as the rims of the glasses, as the fasteners for holding the temples to the frame and for the temples. See, for instance, Japanese laid-open patent publications Nos. 56-89717, 58-179818, 58-179819 and 59-136619.

Problems have arisen with the metals since there are various phases or stages of the metals; martensitic, austenitic and combinations of the two resulting in characteristics such as superelasticity, two way shape memory, rubber like behaviour, austenitic to martensitic transformation and the like.

In the martensitic state, the metals behave like any memory metal in that the material can be deformed and will hold this deformed state, but upon heating will revert to the memory shape. In the superelastic or austenitic state, the material is very elastic but exhibits no shape memory. In the combination state, the material exhibits both properties. Specifically, if the strain on the member is not more than 6% it will recover when released. If the strain is in the range of 8% or greater, it will take a set and not fully recover its original shape.

It should be noted that state changes can be induced by both temperature and strain effects. The superelastic state is stress induced above the martensite to austenite transition temperature. In this mode, the material is normally austenite but upon sufficient stress reverts to martensite. When the stress is relaxed, the material returns to the austenitic phase thus exhibiting great springiness. If the strain exceeds approximately 8% the material acquires a permanent set.

Thus, the two states each provide desirable properties but in certain specific environments such as in eyeglass components not all requirements are met. Specifically, the elastic state has no memory and thus can take a permanent set and the memory state has no elasticity and can be recovered only by heating. It has been a failure of the prior art to apply the appropriate techniques and materials to the appropriate eyeglass frame parts that has inhibited the use of these types of materials in this field.

According to the present invention, there is provided an eyeglass frame according to claim 1.

The present invention utilises shape memory materials in specified areas of eyeglasses where it is desirable to provide a combination of the two characteristics of flexibility and shape memory.

The alloys which exhibit both memory and elasticity may be achieved by properly work hardening martensitic alloys so that the material exhibits some elasticity while retaining some shape memory. Thus, if the component is deformed beyond its elasticity limit (but still less than 8%) the deformation can be recovered via shape memory. If on the other hand, the material exceeds 8% strain, it takes a permanent set, but if it does not exceed 10% strain, it acquires some springiness and can be partially recovered at 10% strain back to 6% strain and a combination material is produced. The shape memory metals employed according to this invention may be nickel titanium alloys such as Nitinol.

Various members of eyeglass frames may be fabricated from these shape memory alloys. Thus, materials possessing both elasticity and shape memory, i.e. combination materials, are useful in certain types of hinges, nose piece supports and, in some instances, in temples and front pieces.

Hence, by employing shape memory material in eyeglass frames new constructions (e.g. completely rimless frames) are possible and prior constructions are improved. Facilitated fitting, certain fastening, effective lens retaining, lower parts and production costs, and enhanced appearance are achievable.

Arrangements according to the invention will now be described by way of example and with reference to the accompanying drawings in which:-

Figure 1 is an illustration of eyeglasses providing a first embodiment of the present invention.

Figure 2 is an illustration showing one embodiment in cross-section of a lens-retaining rim.

Figure 3 is an illustration in cross-section of another rim member and associated lens.

Figure 4 is a graph illustrating various states of martensite and auslensite characteristics of materials.

Figure 5 is a general illustration showing a temple pivotally coupled to a rim by a fastener.

Figures 6, 7, 9, and 10 are illustrations showing various embodiments of shape memory fasteners employable in coupling a temple to a rim as in Figure 5.

Figure 8 is an illustration of the fastener of Figure 7 in the opened configuration.

Figure 11 is an illustration of a fastener employable in the embodiment of Figure 10.

Figure 12 is an illustration of a hinge arrangement employing a shape memory nut and bolt.

Figures 13 and 14 are front view and top view illustrations, respectively, showing the coupling of a nose bridge and temples to the lenses of the glasses.

Figure 15 is an illustration showing a shape memory rim which engages a lens and pivotally engages a temple both upon heat recovery.

Figure 16 is an illustration of a support for a nose piece for use in accordance with the present invention.

Figure 17 is an illustration of a one piece hinge in accordance with the present invention, and

Figure 18 illustrates a type of temple employed in accordance with the present invention.

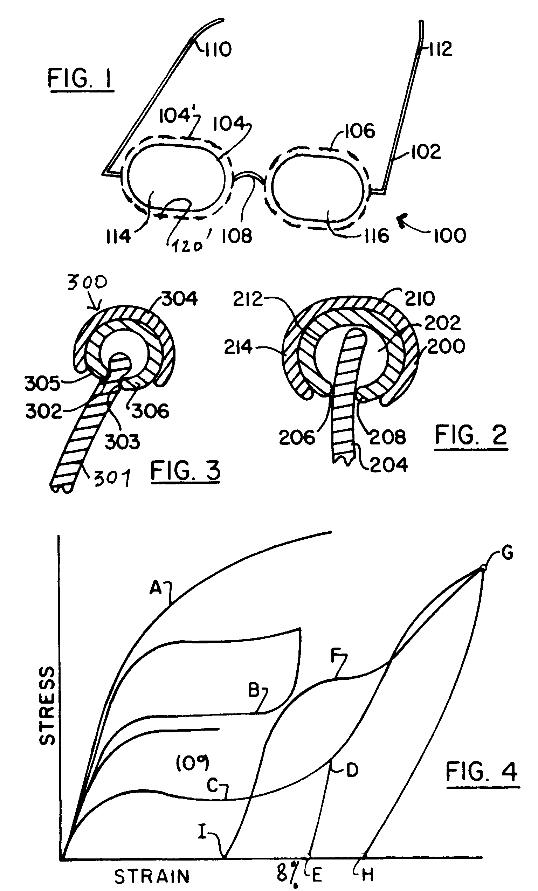

Referring to Figure 1, eyeglasses 100 are shown having a frame 102. The frame 102 includes two rims 104 and 106, a nose bridge 108, and temples 110 and 112 which extend from the rims 104 and 106, respectively. The temples 110 and 112 extend back over the ears of a wearer (not shown), the bridge 108 resting on the nose of the wearer.

In Figure 1, the rim 104 is shown in a contracted shape wherein the rim 104 abuts a lens 114 and forms a tight fit therewith. The dashed representation 104' shown in Figure 1 indicates a configuration of the rim 104 when expanded outwardly relative to the lens 114. Rim 106 also depicts an expanded rim relative to a lens 116.

The rims 104 and 106 are made of shape memory martensitic transformation nickel titanium alloy or Nitinol. In this figure, by way of example, the shape memory materials may be formed to have a memory configuration to which they return when sufficient heat is generated therein. This memory characteristic is attributed to changes of state in the metal or alloy (between an austenitic state and a martensitic state, for example) in response to heat being applied. The rim 104 or 106 can be plastically deformed and thereafter recovered to a memory configuration by exposing the rim 104 or 106 to an appropriate temperature. The transition temperatures for shape memory materials are known in the art relating to metal shape memory materials. The methods by which the rims 104 and 106 are taken to a transition, or recovery, temperature include: adjusting the temperature of the environment surrounding the rims 104 and 106; passing current through rims 104 and 106 to generate heat; inductive heating; or other temperature control techniques. Preferably, a technique which permits close control of the temperature of the rims 104 and 106 is employed; e.g. dipping in water of proper temperature.

In one mode of operation, the rim 104 as shown in solid representation in Figure 1 corresponds to the memory configuration thereof. The dashed representation then corresponds to a deformed state of the rim 104'. In the deformed state, the rim 104' is sufficiently large to enable the lens 114 to be inserted therein. Upon heating, the rim 104' contracts so that the inner surface thereof 120' comes into tight contact with the lens 114.

The speed at which the rim 104' contracts may be closely controlled by controlling the application of heat to the rim 104'. (This feature, it is noted, pertains to all of the embodiments of the invention as relates to recovery of the metals.)

By heating rim 106 according to this first operational mode, the rim 106 will contract to retainably engage the lens 116.

In another mode of operation, the rim 104 may be in the deformed state when in the solid representation of Figure 1. By heating the rim 104 in this mode, the memory configuration corresponding to representation 104' results. Hence, in this mode, insertion and removal of a lens 114 is performed when the rim 104' is the memory configuration and the lens 114 is held in place by a deformed rim 104.

Referring now to Figure 2, a preferred cross-section for a rim 200 according to the invention is shown. The cross-section is C-shaped defining a channel 202 along the length of the rim 200. The channel 202 has a radial dimension which can be selectively increased or decreased to enable release of a lens 204 or retention of the lens 204, respectively. As previously suggested, either release or retention can be effected by recovery to the memory configuration, the complementary operation being performed by deforming the radial dimension of the rim 200. Deformation may, if desired, be effected by spring-loading which tends to reduce the channel radius-- the channel being increased in radius r with heating to recovery temperatures.

In considering Figure 2, it should be noted that the lens 204 may be retained (a) solely or primarily by the inturned edges 206 and 208 of the rim 200 or (b) by the inturned edges 206 and 208 together with a friction fit against the inner surface 210 of the rim 200.

As shown in Figure 2, the rim 200 includes an inner layer 212 and an outer layer 214. The inner layer 212 is shown having the edges 206 and 208 disposed therealong, although the invention also contemplates providing the retaining edges along the outer layer 214. (In this latter embodiment the C-shape circumferential, i.e. angular, dimension of the outer layer 214 would be relatively greater than the circumferential dimension of the inner layer 212). Similarly, engaging the lens 204 by both layers 212 and 214 is also contemplated. In any of the above Figure 2 embodiments, either the inner layer 212 or the outer layer 214 may comprise a shape memory material. The other layer is then, preferably, some other metal. When the outer layer 214 is shape memory material, the rim 200 preferably closes upon heating to engage the lens 204. When the inner layer 212 is shape memory material, the rim 200 opens to disengage the lens 204 upon heating to the memory configuration. Accordingly, by dipping rim 200 into hot water, the wearer or practitioner is able to remove and replace the lens 204 which is engaged upon cooling. It should be recognised that the C-shaped cross-section may be provided in a closed rim (e.g. see Figure 1) or partial rim embodiment.

Referring to Figure 3, there is illustrated in cross-section a lens 301 having grooves 302 and 303 formed in opposite faces of the lens about its periphery. A C-shaped frame member 304 is disposed about the periphery of the lens and has inturned edges 305 and 306 seated in the grooves 302 and 303, respectively.

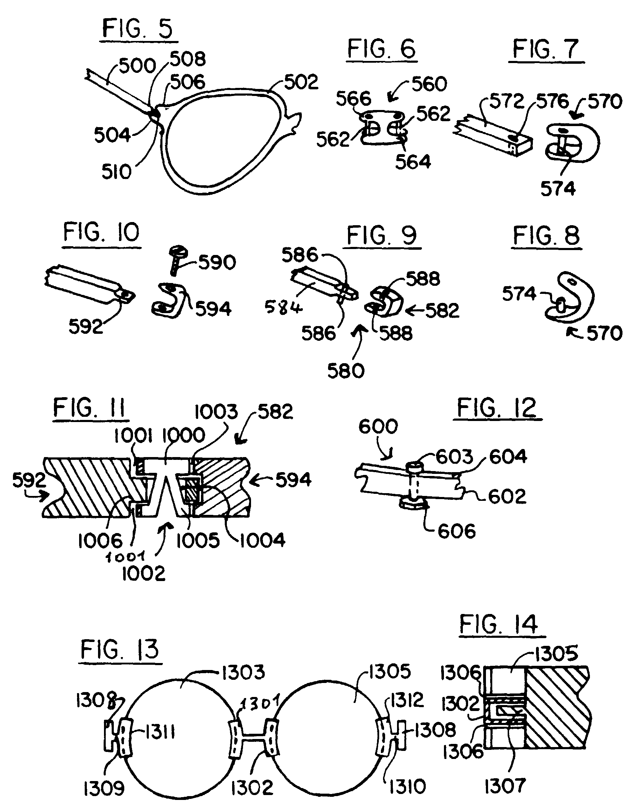

A rim such as illustrated in Figure 2 may be employed but preferably a rim of a single material having shape memory is employed. Elasticity may not be a major factor in such an application but strength is and the grooves permit a secure hold on the lens. To achieve elasticity as well as memory, material with combination characteristics (Curve F of Figure 4) is employed.

It should be realised that the C-shaped cross-section of the rim 300 need not be circular as illustrated but may be of other shapes which would function similarly.

Reference is made to Figure 4 of the accompanying drawings which is a graph of various characteristics of Nitinol which may be attained through various treatments of the material. The materials represented by these graphs have from about 49.9% to 51.5% Titanium by atomic weight.

The graph A of Figure 4 represents a material at a temperature well above its transition temperature, i.e. in the austenitic state. The material has no shape memory but is quite strong and difficult to bend.

Curve B represents the superelasticity state. The temperature of the material of Curve B is very close to its transition temperature but the material is in the austenitic state. In this condition the material, so long as it is not strained more than about 6%, will follow Curve B; the material converting to martensite to relieve the stress and upon release of the stress the material reverts to austenite and resumes its original shape. The materials represented by Curves A and B do not have shape memory. If they are subject to a strain of over approximately 8%, the material will not return to its original state.

Referring now to Graph C, the material represented by this curve is in the martensitic state and thus has shape memory. If the material is stressed such that strain does not exceed approximately 8%, the material will reach point D on the curve and when the stress is released, it will go to point E on the curve and remain there until heated to a temperature close to the initial martensitic to austinite transition temperature. Over the range of temperatures from the beginning of the martensite transition to the temperature at which the austenitic state is fully achieved, the material will recover to its original shape; thus shape memory.

The Curve F represents a still further function of the material. If the material is stressed along the Curve C to a point G the material when released reverts to a position H along the strain axis or abscissa indicating a permanent set. If the composition of the material is such that its transition temperature is about 50°C and the material has been work hardened and the material is now heated above its transition temperature, the material will assume a shape as represented by the point I on the strain axis, that is, the material will recover about 4% of the strain to 6% strain. The material will thereafter follow the F curve which represents the combination phenomena previously discussed.

Although only Nitinol has been discussed herein, various changes in properties are affected by additives, heat treatment and work hardening. See, for instance, Shape Memory Alloys, Page 728, Vol 20, of Kirk-Othmer's Encyclopedia of Chemical Technology, John Wiley & Sons, Third Edition. Still other materials exhibit some of these same properties but are not currently economically feasible.

Referring now to Figure 5, the fastening of an eyeglass frame temple 500 to an eyeglass frame rim 502 with a fastener 504 is detailed. In Figure 5, a shape memory member 506 having a U-shaped cross-section is shown extending from the rim 502. Inserted into the member 506 is an end portion 508 of the temple 500. A pivot element 510 enables the temple 500 and the member 506 to be pivotally coupled when the member 506 is closed as shown in Figure 5. The member 506 is shown in its memory configuration.

The temple 500 can be pivotally coupled by recovering the member 506 to the memory configuration thereof. In such an embodiment, a shape memory member is employed and covered to the initial position by heat.

In Figure 6, a dual open-ended fastener 560 is shown having an H-shaped cross-section--or two U-shaped cross-sections. At each end is a transverse protrusion 562 extending inwardly from one side 564 of the fastener 560. The other side 566 of the fastener 560 is deformable to open the space between the protrusions 562 and the side 566 and is recoverable by heating to a recovery temperature. Fastener 560 may be used in an application like that shown in Figure 5.

The operation of the fastener 560 of Figure 6 is similar to that of the single open-ended fastener 570 of Figures 7 and 8. In Figure 7, the single openended shape memory fastener 570 is closed. With the temple end portion 572 inserted therein, a protrusion 574 extends through an aperture 576 in the temple end portion 572, thereby forming a pivotal coupling. In Figure 8, the fastener 570 is open to permit the insertion or removal of the temple end portion 572.

In Figure 7-8, the yoke or member 570 for instance may be located on the temple and clamp a member such as the end 572 on the main frame. It is not intended to limit the arrangement to a single pin such as pin 574 but a half pin may extend from each leg of the U or yoke and engage a hole such as 576 in member 572. Also, both members, the temple and frame member, may be yokes with opposed pins, or hemispheres, engaging opposed holes in the other member.

Figure 9 shows another type of fastener 580. Rather than having a protrusion 574 on the U-shaped, shape memory member 582 as in Figure 7, temple end portion 584 has transverse male elements 586 which are receivable by complementary female elements 588 in U-shaped member 582. As in the Figures 7 and 8 embodiment, the member 582 can similarly open and close to provide a pivotal coupling.

In Figure 10, pivotal coupling is achieved by means of a shape memory stud or screw. The screw 590 screws or if a stud is pushed easily into apertures in a temple end portion 592 and a U-shaped element 594 when aligned. When recovered, the screw or stud 590 expands to tightly engage the U-shaped element 594.

If the element 590 is a stud, it takes the form of the stud of Figure 11. The stud has a head portion 1000 seated in a hole 1003 in one leg of the U-shaped member 594. A split shank 1002 extends from head 1000 through an aligned hole 1004 of smaller diameter than the hole 1003 in the end portion 592 of the temple. The end of the stud has short outwardly extending feet 1005 which are lodged in a further aligned hole in the bottom leg of the U-shaped member 594 which hole is of the same diameter as the hole 1003 in the top leg. The legs of the U-shaped member 594 are received in a pair of recesses 1001 in the end portion 592 of the temple.

When it is in its stressed state, the stud shank is contracted and slips readily through the aligned holes in the temple and U-shaped member 594. When the split shank of the stud expands the feet 1005 lock behind a shoulder 1006 on the temple end portion 592 and also engage the side walls of the hole 1004 in the temple end portion and the hole in the bottom leg of the U-shaped member to retain the members against separation.

The feet 1005 may be compressed together to reset the stud and permit extraction. The heat recoverable materials employed in the embodiments of Figures 5 to 11 are all of the combination type so that, particularly referring to Figures 10 and 12, the studs or screws can be snapped into place.

It will be noted that in the embodiments of Figures 10 and 11, the stud or screw 590 is recessed in the members to be joined so that no part of it can be snagged or caught on adjacent objects. There is thus little likelihood of the stud or screw being compressed and loosened or withdrawn.

In Figure 12 a screw and nut assembly 600 is shown for providing fastening through a lens 602 or to a temple. As depicted therein, the screw 603 extends through a rim 604 and the lens 602 and is received by a complementary nut 606. The screw 603 and/or the nut 606 comprise shape memory material. When the screw 603 has shape memory, it is preferably in a compressed state when inserted into the nut 606. When the nut has shape memory, it is preferably expanded when the screw 603 is inserted therein. When recovered then, the screw 603 expands radially and/or the nut 606 contracts radially to effect tight coupling therebetween. The magnitude of contraction and/or expansion is readily controlled by the predefined memory configuration of the screw 603 and/or nut 606. These elements may also be recessed. The same concept may be employed to produce a rimless design.

An alternative for the arrangement of Figure 12 is provided by the arrangement illustrated in Figures 13 and 14. Referring specifically to these Figures, relatively small arcuate rim members are provided which clamp the lens at the temples and at the nose piece. Specifically, shape memory members 1301 and 1302 are preferably squared C-shaped in cross-section and arcuate lengthwise to conform to the circumferential curvation of lenses 1303 and 1305, respectively. The lenses are grooved at the circumference and preferably at both faces to receive the C-arms of the C-shaped members; grooves 1304 and 1306 leave a narrow projection 1307 extending from the lens 1305. The C-shaped member clamps the projection 1307 and is of the combination type of material as illustrated by Curve F of Figure 4. Such material is of particular use since elasticity is of value in the event the glasses are struck and the nose piece is bent. Strain which does not exceed 8% will not produce a permanent set but if a permanent set is induced by a strain of less than approximately 10% (a very large strain in such an environment) the set can be recovered by heating the members.

Referring again to Figure 13, temples 1308 are secured via hinges 1309 and 1310, to the lenses 1303 and 1305, by members 1311 and 1312 which are substantially identical to members 1301 and 1302, except for the hinge pieces. The method of connection to the lens is also identical. The various members 1301, 1302, 1311 and 1312 are greatly enlarged in the drawings for purposes of clarity of illustration but in reality provide a substantially rimless eyeglass of sturdy construction and yet with the ability to readily replace defective parts.

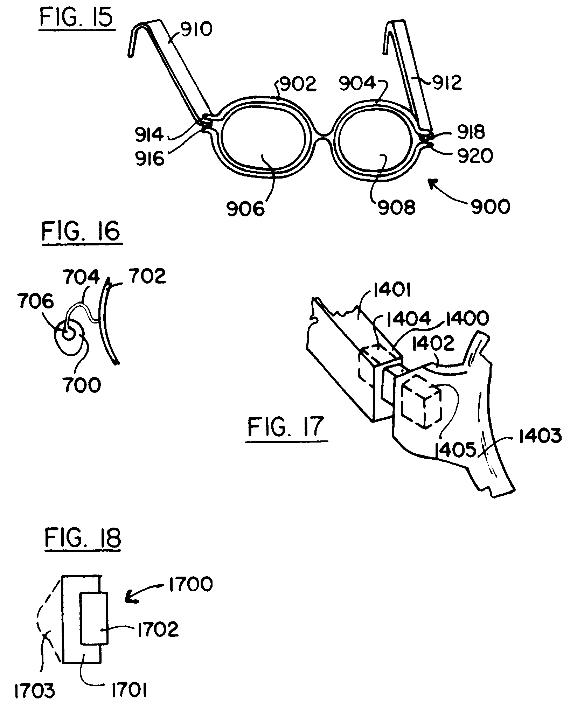

Figure 15 shows an eyeglass frame 900 having shape memory rims 902 and 904 which contract radially inwardly when heated to a recovery temperature. As the rims 902 and 904 decrease in radius upon recovery, lenses 906 and 908 inserted therein are engaged by the rims 902 and 904 and, also, temples 910 and 912 are pivotally engaged. Specifically, protrusions 914, 916 and 918, 920 enter depressions or holes in the temples 910 and 912, respectively.

Further in regard to Figure 15, it is noted that the temples 910 and 912 may comprise stainless steel (SST) or some other metal when coupled to the rims 902 and 904 with a hinged joint as shown. Alternatively, the joint may comprise a thin section of Nitinol which has good flexibility and fatigue properties. That is, instead of a multi-piece hinge, pivotal coupling may be achieved by a foldable length of Nitinol disposed between each rim 902 or 904 and temples 910 and 912, respectively as illustrated in Figure 17.

Turning now to Figured 16, nose rest 700 is shown coupled to a rim 702 by an extension 704 of the rim 702. Each nose rest 700 may be tightly coupled to an extension 704 by a shape memory fastener 706. The fastener 706 is deformable from the memory configuration thereof shown in Figure 15 to open sufficiently to enable the extension 704 to be inserted or removed. When recovered, the fastener 706 encompasses and engages the extension 704. The material for these rests is of the Curve F type to permit both flexure over a limited range and memory.

Referring more specifically to Figure 17 of the accompanying drawings, there is illustrated a hinge for the temple frame connection. In this modification, both the end 1400 of the temple 1401 and an extension 1402 from frame 1403 have deep recesses 1404 and 1405, respectively.

A blade of Nitinol or like material treated to have properties as represented by Curve F of Figure 4 is inserted in the recesses 1404 and 1405 and expanded to tightly engage the sides of the recesses.

In this configuration the strain must not exceed 10% so that a permanent set is not imparted to the blade. So long as this factor is observed, the elasticity from the 6%-8% strain is employed to maintain tension against the side of the head of the wearer. If the blades are strained between 8% and 10%, the original shape may be recovered by heat. In order to reduce the possibility of excessive strain, the blade should be set at a 45° angle so that the deflection from the set angle in either direction is minimized.

The blades could also be riveted to the frame and temples. The temples may also advantagously employ Nitinol or like material covered with a soft plastic. A combination type material is employed and the encasing plastic has to be a high temperature plastic to withstand the memory recovery temperatures.

Referring now specifically to Figure 18, temple 1700 is composed of a U-shaped Nitinol or like member 1701 filled with a plastic insert 1702 which contacts the head of the wearer. For extra strength the Nitinol member could be an I beam or could have an outward decorative ridge, such as ridge 1703 illustrated in dashed lines. If such configuration is employed, the channel could be eliminated and the whole temple covered in plastic. Further, the channel 1701 could have return legs which close about an SST insert to form an elastic member having memory.

## Claims

1. An eyeglass frame having a portion or portions fabricated from a work-hardened and heat treated nickel titanium shape memory alloy, preferably with a titanium content of 49.9 to 51.5 atomic weight %, and a transition temperature of about 50°C
wherein,
the portion or portions are in a work-hardened and heat treated condition, obtainable by
- stressing a martensitic nickel titanium shape memory alloy to a strain of more than 8% to impart a permanent set after releasing the stress, and
- heating the work hardened alloy above its transition temperature, to recover about 4% of the strain to 6% strain.
in which condition the portion or portions exhibit both elasticity and heat-recoverable shape-memory.

2. An eyeglass frame according to Claim 1, wherein said portions fabricated from said shape-memory alloy comprise a pair of temples.

3. An eyeglass frame according to Claim 1, wherein said portion fabricated from said shape-memory alloy comprises a nose bridge.

4. An eyeglass frame according to Claim 1, said frame including a pair of lens rims and a pair of nose pads, and wherein said portions fabricated from said shape-memory alloy comprise connections between said lens rims and said nose pads.

5. An eyeglass frame according to Claim 1, comprising one or more frame components having a generally U- or C-shaped cross-section, said frame component or components being made of said shape-memory alloy having a transformation temperature above which the alloy transforms from one state to another state to change the dimension of the U- or C-shaped opening within said cross-section so as to grip or release another part inserted therein.

6. An eyeglass frame according to Claim 5, said frame including a pair of rims and a pair of temples, and said frame components each providing the connection between a respective temple and a respective rim.

7. An eyeglass frame according to Claim 6, wherein each said connection between a temple and a rim comprises a U-shaped piece of said shape-memory alloy in one of its said states, said shape capable of being deformed to open the U-shape when said alloy is in the other state.

8. An eyeglass frame according to Claim 5, wherein said frame components comprise a pair of rims each having a generally C-shaped cross-section when said shape-memory alloy is in one of its states, said C-shape capable of being deformed to open the C-shape when said alloy is in its other state.

9. An eyeglass frame according to Claim 8, wherein each of said rims comprises an outer layer and an inner layer, said inner layer mounted concentrically within said outer layer, one of said layers being made of said shape-memory alloy and the other layer being made of a material capable of exerting a deformation-resisting force against said shape-memory alloy layer, said shape-memory alloy layer being capable of overcoming said force when the shape-memory alloy layer changes its state.

10. An eyeglass frame according to any of Claims 5 to 9, wherein said alloy maintaining a gripping force with respect to a part inserted in said U- or C-shaped opening when said alloy returns to its lower temperature state.

## Patentansprüche

1. Brillengestell, bei dem ein Teil oder Teilbereiche aus aus einer verfestigten und wärmebehandelten formspeichernden Nickel-Titan-Legierung, vorzugsweise mit einem Titangehalt von 49,9 bis 51,5 Atomgewichtsprozent und einer Übergangstemperatur von etwa 50°C, hergestellt sind,
dadurch gekennzeichnet, daß
der Teil oder die Teilbereiche in einem verfestigten und wärmebehandelten Zustand sind, erhältlich durch
- Spannung einer formspeichernden martensitischen Nickel-Titan-Legierung auf eine Dehnung von mehr als 8 % zur Verleihung einer bleibenden Verformung nach dem Lösen der Spannung, und
- Erwärmung der verfestigten Legierung über ihre Übergangstemperatur, um etwa 4 % der Dehnung auf 6 % Dehnung zurückzugewinnen,
wobei in diesem Zustand der Teil oder die Teilbereiche sowohl Elastizität als auch Wärme zurückgewinnbare Formspeicherung aufweisen.

2. Brillengestell nach Anspruch 1, worin die aus der formspeichernden Legierung hergestellten Teilbereiche ein Paar Brillenbügel umfassen.

3. Brillengestell nach Anspruch 1, worin der aus der formspeichernden Legierung hergestellte Teilbereich einen Nasensteg umfaßt.

4. Brillengestell nach Anspruch 1, bei dem das Gestell ein Paar Brillenglasfassungen und ein Paar Nasenpuffer enthält, und bei dem die aus der formspeichernden Legierung hergestellten Teilbereiche Verbindungen zwischen den Brillenglasfassungen und den Nasenpuffern umfassen.

5. Brillengestell nach Anspruch 1, Welches ein oder mehrere Gestellkomponenten umfaßt, die einen im allgemeinen U- oder C-förmigen Querschnitt aufweisen, wobei die aus der formspeichernden Legierung hergestellte Gestellkomponente oder die Gestellkomponenten eine Umwandlungstemperatur haben, überhalb welcher die Legierung von einem Zustand in einen anderen Zustand umwandelt, um die Dimension der U- oder C- förmigen Öffnung innerhalb des Querschnitts zu verändern, so daß sie einen anderen darin eingesteckten Teil greift oder freigibt.

6. Brillengestell nach Anspruch 5, dadurch gekennzeichnet, daß das Gestell ein Paar Fassungen und ein Paar Brillenbügel umfaßt, und daß die Gestellkomponenten jeweils die Verbindung zwischen einem jeweiligen Bügel und einer jeweiligen Fassung besorgen.

7. Brillengestell nach Anspruch 6, worin jede Verbindung zwischen einem Brillenbügel und einer Fassung ein U-förmiges Teilstück aus formspeichernder Legierung in einem ihrer Zustände umfaßt, wobei die Form fähig ist deformiert zu werden, um die U-Form zu öffnen, wenn die Legierung in dem anderen Zustand ist.

8. Brillengestell nach Anspruch 5, worin die Gestellkomponenten ein Paar Fassungen umfassen, wobei jede einen im allgemeinen C-förmigen Querschnitt hat, wenn die formspeichernde Legierung in einem ihrer Zustände ist, wobei die C-Form fähig ist, deformiert zu werden, um die C-Form zu öffnen, wenn die Legierung in ihrem anderen Zustand ist.

9. Brillengestell nach Anspruch 8, dadurch gekennzeichnet, daß jede der Fassungen eine äußere Schicht und eine innere Schicht umfaßt, daß die innere Schicht konzentrisch innerhalb der äußeren Schicht angeordnet ist, daß eine der Schichten aus der formspeichernden Legierung und die andere Schicht aus einem Material hergestellt ist, welches fähig ist, eine Formänderungs-Widerstands-Kraft gegenüber der Schicht aus formspeichernder Legierung auszuüben, und daß die Schicht aus formspeichernder Legierung fähig ist, die Kraft zu überwinden, wenn die Schicht aus formspeichernder Legierung ihren Zustand verändert.

10. Brillengestell nach einem der Ansprüche 5 bis 9, dadurch gekennzeichnet, daß die Legierung in bezug auf einen in die U- oder C-förmige Öffnung eingefügten Teil eine Einspannkraft aufrechterhält, wenn die Legierung in ihren niedrigeren Temperaturzustand zurückkehrt.

## Revendications

1. Monture de lunettes dont une partie ou des parties sont fabriquées à partir d'un alliage nickel-titane à mémoire de forme, écroui et traité thermiquement, ayant de préférence une teneur en titane de 49,9 à 51,5 % en poids atomique et une température de transition d'environ 50°C, dans laquelle ladite partie ou lesdites parties sont dans un état d'écrouissage et traitement thermique pouvant être obtenu par :
- application, à un alliage martensitique nickel-titane à mémoire de forme, d'un effort jusqu'à une déformation supérieure à 8 % pour lui conférer une configuration permanente après suppression de l'effort ; et
- chauffage de l'alliage écroui ci-dessus au-delà de sa température de transition pour lui faire récupérer d'environ 4 % à 6 % de sa déformation,
monture dans laquelle la ou lesdites portions présentent à la fois de l'élasticité et une mémoire de forme thermorécupérable.

2. Monture de lunettes selon la revendication 1, dans laquelle lesdites parties constituées par l'alliage à mémoire de forme constituent une paire de branches.

3. Monture de lunettes selon la revendication 1, dans laquelle ladite partie constituée par l'alliage à mémoire de forme constitue un pont.

4. Monture de lunettes selon la revendication 1, ladite monture comprenant deux cercles pour verres et deux plaquettes, et dans laquelle lesdites parties constituées par l'alliage à mémoire de forme constituent des liaisons entre les cercles et les plaquettes.

5. Monture de lunettes selon la revendication 1, comprenant un ou plusieurs composants de monture ayant une section droite de forme générale en U ou en C, ce ou ces composants de monture étant constitués par ledit alliage à mémoire de forme ayant une température de transformation au-dessus de laquelle l'alliage passe d'un état à un autre pour modifier la dimension de l'ouverture en U ou en C de ladite section droite, de façon à enserrer ou relâcher une autre pièce qui y est insérée.

6. Monture de lunettes selon la revendication 5, ladite monture comprenant deux cercles et deux branches, et lesdits composants de monture assurant chacun la liaison entre une branche et un cercle.

7. Monture de lunettes selon la revendication 6, dans laquelle chacune des liaisons entre une branche et un cercle consiste en une pièce en U faite dudit alliage à mémoire de forme dans l'un de ses dits états, ladite forme pouvant être changée pour ouvrir le U lorsque ledit alliage est dans l'autre état.

8. Monture de lunettes selon la revendication 5, dans laquelle lesdits composants de monture consistent en une paire de cercles ayant chacun une section droite de forme générale en C lorsque ledit alliage à mémoire de forme est dans l'un de ses états, ladite forme en C pouvant être changée pour ouvrir le C lorsque ledit alliage est dans son autre état.

9. Monture de lunettes selon la revendication 8, dans laquelle chacun des cercles comprend une couche extérieure et une couche intérieure, ladite couche intérieure étant montée concentriquement à l'intérieur de ladite couche extérieure, l'une desdites couches étant constituée par ledit alliage à mémoire de forme et l'autre couche étant constituée par une matière susceptible de déployer une force de résistance à la déformation à l'encontre la couche d'alliage à mémoire de forme, la couche d'alliage à mémoire de forme étant susceptible de vaincre ladite force lorsque la couche d'alliage à mémoire de forme change d'état.

10. Monture de lunettes selon l'une quelconque des revendications 5 à 9, dans laquelle ledit alliage maintient une force de serrage vis-à-vis d'une pièce insérée dans ladite ouverture en U ou en C lorsque ledit alliage revient dans l'état qui est le sien à la température inférieure.
